# EUROPÄISCHE PATENTANMELDUNG

(11) **EP 1 852 403 A1**
(43) Veröffentlichungstag der Anmeldung: **07.11.2007**
(21) Anmeldenummer: 06009133.7
(22) Anmeldetag: 03.05.2006
(51) Int. Cl.: C04B 18/26, C04B 28/02

(54) **Lignocellulisischer Zuschlagstoff und Verfahren zu seiner Herstellung**

(71) Anmelder: Borkowski, Martin, 45891 Gelsenkirchen (DE); Körning, Hans-Otto, 45879 Gelsenkirchen (DE)
(72) Erfinder: Borkowski, Martin, 45891 Gelsenkirchen (DE); Körning, Hans-Otto, 45879 Gelsenkirchen (DE)
(74) Vertreter: Auerbach, Bettina

(57) **Zusammenfassung**

Die Erfindung betrifft einen lignocellulosischer Zuschlagstoff und ein Verfahren zu dessen Herstellung, auf der Basis von spanartigem Aufbereitungsgut aus Holz, Schäben und/oder Halmpflanzenteilen, welches mit einer Ummantelung ausgestattet ist, wobei die einzelnen Elemente des Zuschlagstoffs aus dem lignocellulosischen Kern und einer Ummantelung aus ausgehärtetem mineralischen Bindemittel bestehen.

Derartige technische Lösungen werden im Bauwesen für die Herstellung von Leichtbeton und für die Herstellung von wärme- und schalldämmenden Schüttungen benötigt.

## Beschreibung

Die Erfindung betrifft einen lignocellulosischer Zuschlagstoff auf der Basis von spanartigem Aufbereitungsgut aus Holz, Schäben und/oder Halmpflanzenteilen, das mit einer Ummantelung ausgestattet ist. Weiterhin betrifft die Erfindung ein Verfahren zu dessen Herstellung. Derartige technische Lösungen werden im Bauwesen für die Herstellung von Leichtbeton und für die Herstellung von wärme- und schalldämmenden Schüttungen benötigt.

In bereits bekannten Anwendungen von Holzspänen als Zuschlagstoff werden die Holzspäne mit Wasser und Zement sowie mit weiteren Zusätzen gleichzeitig verarbeitet. Je nach Beanspruchung kann dabei das Verhältnis von Holzspänen zu Zement als dem bevorzugten Bindemittel in weiten Grenzen variieren.
Im Gegensatz zu anderen Zuschlagstoffen enthalten alle Hölzer mehr oder weniger große Anteile die Abbindung des Zementes mitunter stark verzögernde Substanzen. Hinzu kommt die Anfälligkeit der Holzspäne gegenüber dem Befall durch Mikroorganismen. Deshalb sind bereits Vorschläge entwickelt worden, mit deren Hilfe sowohl die Mineralisierung als auch die biozide Ausstattung der einzusetzenden Holzspäne erreicht werden soll. So beschreibt die DE 27 15 533 A1 ein Verfahren zur Herstellung von Holzbeton, bei dem als Mineralisierungssubstanzen als Zusatzmittel zum hydraulischen Bindemittel Erdalkalioxide bzw. -hydroxide zum Einsatz kommen. Ein weiterer Verfahrensvorschlag wird in der DE 19 13 939 A1 unterbreitet. Er sieht den Einsatz eines Mineralisierungsmittels für Holz zur Erzeugung von Holzbeton vor. Als bevorzugte Mineralisierungsmittel werden hierbei Ameisensäure oder Formiate der Alkalien, Erdalkalien bzw. des Ammoniums vorgeschlagen.

Ebenfalls der Mineralisierung und der Konservierung von Holzspänen für die Verwendung in Holzbeton dient ein Verfahrensvorschlag der mit der DE 24 35 105 A1 bekannt gemacht wurde. Er sieht die Zugabe von aktiviertem Schwefel zur Holzbetonrohmasse vor, wobei zur Aktivierung des Schwefels bevorzugt Metalloxide und Metallhydroxide sowie sauer reagierende Salze verwendet werden.

Die Nachteile der bekannten technischen Lösungen bestehen insbesondere darin, dass die einzusetzenden Holzspäne in einem einstufigen Prozess sowohl mit den Konservierungs- als auch mit den Mineralisierungs- und mit den Bindemitteln sowie mit dem Anmachwasser vermischt werden. Dies bedingt ein mehr oder weniger großes Schwinden des erzeugten Holzbetons, verhältnismäßig lange Abbindezeiten sowie einen zu vermeidenden Eintrag von Wasser in den Baukörper.

Die Aufgabe der Erfindung besteht deshalb im Schaffen einer technischen Lösung, mit deren Hilfe die Mängel des bekannten Standes der Technik überwunden werden. Die Vorteile des Einsatzes .. des nachwachsenden Zuschlagstoffes Holzspäne sollen in vollem Umfang genutzt werden können, ohne die mit dem bisherigen Lösungen verbunden Nachteile in Kauf nehmen zu müssen. Die zu entwickelnde fortschrittliche Lösung soll mit einfachen Mitteln und kostengünstig realisiert werden können und eine große Variabilität des Einsatzes von lignocellulosischen Spänen in Baukonstruktionen ermöglichen.

Die Aufgabe wird erfindungsgemäß durch die Merkmale der Ansprüche 1 und 8 gelöst, wobei bevorzugte Ausgestaltungen in den Unteransprüchen beschrieben sind.

Danach besteht ein lignocellulosischer Zuschlagstoff aus spanartigem Aufbereitungsgut aus Holz, Schäben und/oder Halmpflanzenteilen, dass mit einer Ummantelung ausgestattet ist. Die einzelnen Elemente des Zuschlagstoffs bestehen dabei aus einem lignocellulosischem Kern und einer Ummantelung aus ausgehärtetem mineralischen Bindemittel. Bevorzugt besteht der Kern eines einzelnen Elementes des Zuschlagstoffes aus lignocellulosischen Spanteilen mit einem Durchmesser zwischen 2 mm und 10 mm und einer Länge zwischen 2mm und 50 mm. In besonderer Weise ist der lignocellulosische Kern des Einzelelementes des Zuschlagstoffs mit einer Salzfracht ausgestattet, wobei diese bevorzugt aus Calcium-, Magnesium- und/oder Natriumcarbonat besteht. Hingegen besteht das Bindemittel der mineralischen Ummantelung aus Dolomit, Kalk und/oder Zement. Die Oberfläche der einzelnen Elemente des Zuschlagstoffs ist hydrophob ausgestattet, wobei die eingesetzten Hydrophobierungsmittel bevorzugt modifizierte reaktive Siloxane sind. Derartig beschaffene lignocellulosische Zuschlagstoffe besitzen alle wesentlichen Vorzüge von bautechnisch verwertbaren Einsatzstoffen aus dem regenerativen Rohstoff Biomasse. Sie sind leicht, verleihen dem damit hergestellten Baustoff in besonderer Weise wärme- und schalldämmende Eigenschaften und regulieren in hervorragender Weise den Feuchtehaushalt sowohl im Bauszoff selbst als auch in den mit diesem Baustoff ausgestatteten Räumen.
Während organische Baustoffe in bekannter Weise im erhöhten Maße einer Funktionsbeeinträchtigung infolge Schädlingsbefall unterliegen, erfordern sie außerdem wegen des großen Feuchtespeichervermögens verlängerte Trocknungszeiten im Falle ihres unmittelbaren Einsatzes auf der Baustelle. Die neugeschaffene technische Lösung ermöglicht es, auf überraschend einfache Weise die Nachteile des Einsatzes biogener Baustoffe zu vermeiden, ohne die bekannten Vorzüge preis zu geben.
Dies wird erreicht, indem die biogenen Einsatzstoffe in einem vorgeschalteten Prozessschritt außerhalb der Baustelle mit Konservierungsmitteln gegen den Schädlingsbefall ausgestattet werden und in diesem Zusammenhang gleichzeitig eine mineralische Oberfläche erhalten.

Weil die mineralische Oberfläche als Ununantelung jedes Einzelelementes des vorschlagsgemäß hergestellten Zuschlagstoffs ausgeführt ist, kann bei einer nachfolgenden Verarbeitung unter Einsatz von wässrigen Substanzen die erneute Aufnahme wesentlicher Feuchteanteile durch den lignocellulosischen Kern der Einzelelemente des Zuschlagstoffs sicher vermieden werden. Dieser Effekt wird durch den Einsatz von Hydrophobierungsmitteln auf der Oberfläche der Ummantelung der Einzelelemente des Zuschlagstoffs noch unterstützt. Durch gezielte Einstellung des Feuchtezusatzes beim Aufbringen der mineralischen Ummantelung der Einzelelemente des Zuschlagstoffs werden zudem aus dem Kern des Zuschlagstoffelementes Restfeuchtegehalte entzogen.
Das Verfahren zur Herstellung des lignocellulosischen Zuschlagstoffs auf der Basis von spanartigem Aufbereitungsgut aus Holz, Schäben und/oder Halmpflanzenteilen, dass mit einer mineralischen Ummantelung ausgestattet ist, sieht vor, dass zunächst eine Spanfraktion aus lignicellulosischem Einsatzgut in Form von Fasern im Längenbereich zwischen 2 mm und 50 mm gebildet wird. Hierfür wird bevorzugt Zerspanungs- und Fraktionierungstechnik eingesetzt. Anfallende Fein- und Grobfraktionen werden zielgerichtet aus dem Prozess ausgeschieden. Danach wird die für den Einsatz vorbereitete Spanfraktion mit einem salzhaltigem wässrigen Medium getränkt. Dabei dringen gelöste Teile des salzigen Additivs mit dem Mischwasser wenigstens teilweise konservierend in die Zellstruktur der eingesetzten Späne ein. Anschließend werden die mit Additiven getränkten Späne mit etwa 50% einer stabilisierenden Menge hydraulischer Bindemittel vermischt. Hierbei wird eine aushärtende Ummantelung der Einzelspäne bei gleichzeitigem Entzug des in den Zellen des ligocellulosischem Kern der Einzelelemente gespeicherten Mischwassers bewirkt. Danach wird die verbliebene stabilisierende Bindemittelmenge mit einer hydrophobierenden Mittel vermischt und diese Mischung dem bereits ummanteltem Spangut zugesetzt. Schließlich wird das ummantelte Spangut unter Aufrechterhaltung der Schüttguteigenschaft des Zuschlagstoffs einem Abbindeprozess unterworfen. Das zur Konservierung des lignocellulosischen Kerns der Einzelelemente des Zuschlagstoffs eingesetzte wässrige Medium wird aus magnesium-, celcium- und/oder sodahaltigen Einsatzstoffen und Wasser gewonnen.

Die Additive werden dem wässrigem Medium im Verhältnis von 10 bis 19 Masseteilen Calciumcarbonat und 1 bis 10 Masseteilen Natriumcarbonat zugesetzt. Die Additive werden dabei wenigstens teilweise im Mischwasser ausgelöst. Das schließlich ummantelte Spangut wird während der Aushärtung bewegt und belüftet. Es ist auch möglich, die erforderliche Bewegung des Spangutes während der Aushärtung der Ummantelung auf einem Bandförderer bei gleichzeitigem Eintrag von Vibrationsenergie vorzunehmen.
Bevorzugt wird das mineralisierte und hydrophobierte Spangut für weitere Anwendungen zwischengelagert, ohne wegen der zuvor erfolgten Aushärtung des Bindemittels der Ummantelung der Einzelelemente des Zuschlagstoffs seine Schüttguteigenschaften zu verlieren.
Anschließend kann die weitere Anwendung des derartig hergestellten Zuschlagstoffs in Form einer losen Schüttung für Zwecke der Wärme- und/oder Trittschalldämmung vorgesehen werden. Es ist auch möglich, den Zuschlagstoff in leichten und/oder wärmedämmenden Leichtbetonkonstruktionen einzusetzen.

Die Vorteile der Erfindung bestehen zusammengefasst in der nun verfügbaren technischen Lösung, mit deren Hilfe im erweitertem Maße biogenes Material unter Nutzung all seiner Vorteile in Baukonstruktionen zum Einsatz zu bringen. Während die bereits benannten Vorzüge solcher Einsatzstoffe uneingeschränkt nutzbar gemacht werden, gewährleistet die Erfindung nunmehr den sicheren Ausschluss bisheriger Nachteile des Einsatzes von biogenen Baumaterialien. So lassen sich lose, leicht verfestigte und abgebundene Schüttungen für das Erreichen einer hohen Wärme- und/oder Trittschalldämmung in Hohlräumen, unter Fußbodenaufbauten und in Wandkonstruktionen einsetzen. Darüber hinaus sind jegliche Zuschlagstoffanwendungen in leichten und schweren Betonkonstruktionen realisierbar. Das betrifft sowohl die Vorfertigung von Bauelementen als auch die Anwendung in monolithischen Konstruktionen.

Die Erfindung soll nachstehend mit einem Ausführungsbeispiel näher erläutert werden.

### Ausführungsbeispiel:

Ein Zuschlagstoff aus Einzelelementen mit einem Kern aus lignocellulosischem Material und einer mineralischen Ummantelung für den späteren Einsatz als wärme- und trittschalldämmende Schüttung wird dadurch gewonnen, dass für die Herstellung von 1 m³ Zuschlagstoff zwischen 80 kg und 260 kg trockene Späne aus Nadelholz mit einem Durchmesser zwischen 5 mm und 8 mm und einer Länge zwischen 4 mm und 50 mm eingesetzt werden. Weiterhin erfolgt der Einsatz von 150 kg bis 750 kg Portlandzement. Außerdem werden als Mineralisierer zwischen 10 kg und 25 kg teilweise calcinierter Dolomit, Kohlensäurekalk oder Weisskalk zugesetzt. Als konservierendes Salz wird dem Anmachwasser zwischen 5 kg und 12 kg Soda zugegeben. Als Hydrophobierer werden zwischen 0,1 % und 2 %, bezogen auf die gesamte Zementmenge, einer wässrigen Emulsion auf Basis modifizierter reaktiver Siloxane sowie zwischen 1001 und 1501 Anmachwasser eingesetzt.
Zunächst wird das vorgesehene Anmachwasser mit der angegebenen Salzmenge gemischt, wobei das eingesetzte Salz weitestgehend aufgelöst wird. Danach erfolgt das Tränken der vorbereiteten fraktionierten Späne mit dieser Salzlösung. Anschließend wird etwa die Hälfte der rezeptierten Bindemittelmenge mit den feuchten Spänen vermischt, wobei es unter gleichzeitigem Entzug des von den Spänen aufgenommenen Anmachwassers zu einem hydraulischen Abbinden des eingesetzten Bindemittels bei Ausbildung einer vollständigen mineralischen Ummantelung der Einzelspäne des Zuschlagstoffes kommt. Parallel hierzu wird die verbleibende Bindemittelmenge mit dem ausgewählten Hydrophobierer vermischt und anschließend den mineralisierten Einzelelementen des Zuschlagstoffes zugegeben. Der Abbindeprozess erfolgt sodann bei stetiger Bewegung des Mischgutes, womit die Aufrechterhaltung der Schüttguteigenschaften des Mischgutes gewährleistet wird.

Es wird eine Zuschlagstoff aus mineralisierten Einzelelementen erhalten, die jeweils einen lignocellulosischen Kern und eine abgebundene Ummantelung aufweisen. Die Schüttgutdichte des Zuschlagstoffs erreicht Werte zwischen 0,4 und 0,8 kg/dm³.

## Patentansprüche

1. Lignocellulosischer Zuschlagstoff auf der Basis von spanartigem Aufbereitungsgut aus Holz, Schäben und/oder Halmpflanzenteilen, das mit einer Ummantelung ausgestattet ist, **dadurch gekennzeichnet,**
**dass** die einzelnen Elemente des Zuschlagstoffs aus dem lignocellulosischen Kern und einer Ummantelung aus ausgehärtetem mineralischen Bindemittel bestehen.

2. Lignocelluosischer Zuschlagstoff nach dem Anspruch 1, **dadurch gekennzeichnet, dass** der Kern des einzelnen Elementes des Zuschlagstoffes aus Spanteilen mit einem Durschmesser zwischen 2 mm und 10 mm und einer Länge zwischen 2 mm und 50 mm bestehen.

3. Lignocelluosischer Zuschlagstoff nach einem der Ansprüche 1 und 2, **dadurch gekennzeichnet, dass** der lignocellulosische Kern des Einzelelementes des Zuschlagstoffs mit einer Salzfracht ausgestattet ist.

4. Lignocelluosischer Zuschlagstoff nach dem Anspruch 3, **dadurch gekennzeichnet, dass** die Salzfracht aus Calzium-, Magnesium- und/oder Natriumcarbonat besteht.

5. Lignocelluosischer Zuschlagstoff nach einem der Ansprüche 1 bis 4, **dadurch gekennzeichnet, dass** das Bindemittel der mineralischen Ummantelung aus Dolomit, Kalk und/oder Zement besteht.

6. Lignocelluosischer Zuschlagstoff nach einem der Ansprüche 1 bis 5, **dadurch gekennzeichnet, dass** die Oberfläche der einzelnen Elemente des Zuschlagstoffes hydrophob ausgestattet ist.

7. Lignocelluosischer Zuschlagstoff nach dem Anspruch 6, **dadurch gekennzeichnet, dass** die eingesetzten Hydrophobierungsmittel modifizierte reaktive Siloxane sind.

8. Verfahren zur Herstellung des lignocellulosischen Zuschlagstoff auf der Basis von spanartigem Aufbereitungsgut aus Holz, Schäben und/oder Halmpflanzenteilen, das mit einer Ummantelung ausgestattet ist, nach den Ansprüchen 1 bis 7,
**dadurch gekennzeichnet,**
**dass** zunächst eine Spanfraktionen bevorzugt aus Fasern im Längenbereich zwischen 2 mm und 50 mm gebildet wird,
**dass** die für den Einsatz vorbereitete Spanfraktion zunächst mit einem salzhaltigem wässrigem Medium getränkt wird,
**dass** die gelösten Teile des Additivs mit dem Mischwasser wenigstens teilweise konservierend in die Zellstruktur der eingesetzten Späne eindringen,
**dass** weiterhin die mit Additiven getränkten Späne mit etwa 50% einer stabilisierenden Menge hydraulischer Bindemittel vermischt werden und dabei eine aushärtende Ummantelung der Einzelspäne bei gleichzeitigem Entzug des im lignocellulosischem Kern des Einzelelementes des Zuschlagstoffs gespeicherten Mischwassers bewirkt wird,
**dass** anschließend die verbliebene stabilisierende Bindenittelmenge mit einem hydrophobierenden Mittel vermischt wird und diese Mischung dem ummantelten Spangut zugesetzt wird und
**dass** das ummantelte Spangut unter Aufrechterhaltung der Schüttguteigenschaft einem Abbindeprozess unterworfen wird.

9. Verfahren zur Herstellung des lignocellulosischen Zuschlagstoff nach dem Anspruch 8, **dadurch gekennzeichnet, dass** das wässrige Medium aus magnesium-, calcium- und/oder sodahaltigen Einsatzstoffen und Wasser gewonnen wird.

10. Verfahren zur Herstellung des lignocellulosischen Zuschlagstoff nach einem der Ansprüche 8 und 9, **dadurch gekennzeichnet, dass** die Additive im Verhältnis von 10 bis 19 Masse-Teilen Calciumcarbonat und 1 bis 10 Masse-Teilen Natriumcarbonat zugesetzt werden.

11. Verfahren zur Herstellung des lignocellulosischen Zuschlagstoff nach einem der Ansprüche 8 bis 10, **dadurch gekennzeichnet, dass** die Additive wenigstens teilweise im Mischwasser aufgelöst werden.

12. Verfahren zur Herstellung des lignocellulosischen Zuschlagstoff nach einem der Ansprüche 8 bis 11, **dadurch gekennzeichnet, dass** das ummantelte Spangut während der Aushärtung bewegt und belüftet wird.

13. Verfahren zur Herstellung des lignocellulosischen Zuschlagstoff nach einem der Ansprüche 8 bis 12, **dadurch gekennzeichnet, dass** die Bewegung des Spangutes während der Aushärtung auf einem Bandförderer bei gleichzeitigem Eintrag von Vibrationsenergie erfolgt.

14. Verfahren zur Herstellung des lignocellulosischen Zuschlagstoff nach einem der Ansprüche 8 bis 13, **dadurch gekennzeichnet, dass** das mineralisierte und hydrophobierte Spangut für weitere Anwendungen zwischengelagert wird.

15. Verfahren zur Herstellung des lignocellulosischen Zuschlagstoff nach einem der Ansprüche 8 bis 14, **dadurch gekennzeichnet, dass** die weitere Anwendung als loses Schüttgut für Zwecke der Wärme- und/oder Trittschalldämmung vorgesehen wird.

16. Verfahren zur Herstellung des lignocellulosischen Zuschlagstoff nach einem der Ansprüche 8 bis 15, **dadurch gekennzeichnet, dass** die weitere Anwendung als Zuschlagstoff in leichten und/oder wärmedämmenden Leichtbetonkonstruktionen vorgesehen ist.
